# EUROPÄISCHE PATENTANMELDUNG

(11) **EP 3 928 666 A1**
(43) Veröffentlichungstag der Anmeldung: **29.12.2021**
(21) Anmeldenummer: 21177331.2
(22) Anmeldetag: 02.06.2021
(51) Int. Cl.: A47J 31/52, A47J 31/44, A47J 31/60

(54) **VERFAHREN ZUM ANSTEUERN EINER KAFFEEMASCHINE**

(30) Priorität: 22.06.2020 DE 102020207693
(71) Anmelder: BSH Hausgeräte GmbH, 81739 München (DE)
(72) Erfinder: Bosen, Peter, 85354 Freising (DE); Fisch, Markus, 84326 Falkenberg (DE); Golowkow, Maxim, 93047 Regensburg (DE); Kor, Sobhan, 93059 Regensburg (DE); Mathes, Anton, 83364 Neukirchen am Teisenberg (DE)

(57) **Zusammenfassung**

Die Erfindung betrifft ein Verfahren zum Betreiben einer Kaffeemaschine (1). Gemäß dem Verfahren wird ein Bild eines Bereichs der Kaffeemaschine (1) mittels einer an der Kaffeemaschine (1) vorgesehenen Kamera (2) erfasst. Außerdem wird ein Objektzustand wenigstens eines Objekts (10) im erfassten Bild erkannt. Anschließend wird die Kaffeemaschine (1) in Abhängigkeit von dem erkannten Objektzustand angesteuert.

## Beschreibung

Die Erfindung betrifft ein Verfahren zum Ansteuern einer Kaffeemaschine. Die Erfindung betrifft ferner eine Kaffeemaschine mit einer Steuerungs-/Regelungseinrichtung, die zur Durchführung dieses Verfahrens eingerichtet/programmiert ist.

Zum Betreiben, Warten und Pflegen von Kaffeemaschinen ist es üblicherweise erforderlich, einen oder mehrere Zustände eines Objekts oder das Objekts selbst im Bereich der Kaffeemaschine zu erkennen und zu analysieren. Herkömmlicherweise muss eine derartige Identifikation mittels an das Objekt individuell angepasster Sensoren oder aber manuell durch einen Benutzer der Kaffeemaschine erfolgen. Die manuelle Erkennung durch einen Benutzer ist jedoch unkomfortabel und erhöht die Fehleranfälligkeit beim Betreiben, Warten bzw. Pflegen der Kaffeemaschine. Klassische Sensoren hingegen sind häufig ungenau und relativ teuer.

Es ist daher eine Aufgabe der vorliegenden Erfindung, ein verbessertes Verfahren zum Ansteuern einer Kaffeemaschine zu schaffen, bei welchem die oben beschriebenen Nachteile zumindest teilweise, idealerweise vollständig, ausgeräumt sind.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der Erfindung ist demnach, mittels auf künstlicher Intelligenz basierender Bildverarbeitung einen Zustand eines Objekts im Bereich der Kaffeemaschine zu erkennen und die Kaffeemaschine entsprechend dem erkannten Zustand anzusteuern. Der Begriff "künstliche Intelligenz" bezieht sich vorliegend im Zusammenhang mit der Verarbeitung von Bildern darauf, dass in der Vergangenheit erkannte Zustände der Kaffeemaschine mit dem zugehörigen und seinerzeit verarbeiteten Bild erlernt werden, sodass bei gegenwärtiger Wiedererkennung eines zu verarbeitenden Bilds anhand eines Abgleichs mit dem als einem Zustand zugehörig erlernten Bild dieser Zustand auch für das gegenwärtige Bild erkannt werden kann. Dieser Lernprozess kann automatisiert und kontinuierlich ablaufen, oder aber zeitdiskret. Auf diese Weise können frühzeitig Warnmeldungen an den Benutzer übermittelt, ein mit der Kaffeemaschine zuzubereitendes Getränk individuell den Wünschen des Benutzer angepasst, die Kaffeemaschine einfach gewartet bzw. gepflegt und allgemein die Kaffeemaschine auf diese Weise effektiver betrieben werden.

Das erfindungsgemäße Verfahren dient zum Ansteuern einer Kaffeemaschine. Gemäß dem Verfahren wird ein Bild eines Bereichs der Kaffeemaschine mittels einer an der Kaffeemaschine vorgesehenen Kamera erfasst. Außerdem wird wenigstens ein Objektzustand wenigstens eines Objekts im erfassten Bild erkannt. Anschließend wird die Kaffeemaschine in Abhängigkeit von dem erkannten Objektzustand angesteuert. Erfindungsgemäß wird der wenigstens eine Objektzustand mittels einer auf künstlicher Intelligenz basierenden Auswertungseinrichtung erkannt. Dies ermöglicht ein besonders schnelles und fehlerfreies Erkennen des Objektzustands.

Gemäß einer besonders bevorzugten Weiterbildung des Verfahrens wird der Objektzustand mittels einer auf maschinellem Lernen, vorzugsweise mittels einer auf "Deep-Learning", basierenden Auswertungseinrichtung erkannt. Auf diese Weise kann ein Objektzustand besonders präzise und schnell erkannt werden.

Besonders vorteilhaft wird der Objektzustand zusätzlich mittels Auswertens wenigstens eines Betriebsparameters der Kaffeemaschine erkannt. Auf diese Weise kann die Erkennung des Objektzustands im erfassten Bild durch Auswerten des wenigstens einen Betriebsparameters validiert werden, so dass eine besonders präzise und fehlerfreie Identifikation des Objektzustands realisiert wird.

Gemäß einer vorteilhaften Weiterbildung des Verfahrens wird der Objektzustand wenigstens eines im Bereich wenigstens eines Auslasses der Kaffeemaschine angeordneten Objekts erkannt. Auf diese Weise können Objektzustände, die für das Zubereiten eines Getränks mittels der Kaffeemaschine besonders relevant sind, erkannt werden.

Gemäß einer weiteren vorteilhaften Weiterbildung des Verfahrens umfasst der erkannte Objektzustand einen Füllstand eines Behältnisses, und die Kaffeemaschine wird derart angesteuert wird, dass in Abhängigkeit vom Füllstand des Behältnisses ein Benutzer über diesen Füllstand informiert wird.

Gemäß einer weiteren vorteilhaften Weiterbildung des Verfahrens umfasst der erkannte Objektzustand einen Füllstand einer Tropfschale der Kaffeemaschine, und die Kaffeemaschine wird derart angesteuert, dass in Abhängigkeit vom Füllstand der Tropfschale ein Benutzer über diesen Füllstand informiert wird. Auf diese Weise kann der Benutzer insbesondere auf eine volle Tropfschale hingewiesen werden.

Gemäß einer ebenfalls vorteilhaften Weiterbildung des Verfahrens umfasst der erkannte Objektzustand des wenigstens einen Objekts einen Füllstand eines Milchbehältnisses der Kaffeemaschine, und die Kaffeemaschine wird derart angesteuert, dass in Abhängigkeit vom Füllstand des Milchbehältnisses ein Benutzer über diesen Füllstand informiert wird. Auf diese Weise kann der Benutzer insbesondere über ein volles Milchbehältnis informiert werden.

Gemäß einer weiteren vorteilhaften Weiterbildung des Verfahrens umfasst der erkannte Objektzustand des wenigstens einen Objekts einen Füllstand einer Tresterschale der Kaffeemaschine, und die Kaffeemaschine wird derart angesteuert, dass in Abhängigkeit vom Füllstand der Tresterschale ein Benutzer über diesen Füllstand informiert wird. Mittels dieser Weiterbildung kann ein Benutzer auf eine volle Tresterschale und somit über eine erforderliche Entleerung der Tresterschale informiert werden.

Gemäß einer bevorzugten Weiterbildung des Verfahrens umfasst der erkannte Objektzustand des wenigstens einen Objekts ein maximales Aufnahmevolumen eines Behältnisses zum Aufnehmen eines mittels der Kaffeemaschine zubereiteten Getränks. Bei dieser Weiterbildung wird die Kaffeemaschine derart angesteuert, dass in Abhängigkeit vom erkannten maximalen Aufnahmevolumen des Behältnisses die Menge an zubereitetem Getränk an besagtes maximales Aufnahmevolumen angepasst wird. Mittels dieser Weiterbildung des Verfahrens lassen sich außerdem entsprechende Betriebsparameter der Kaffeemaschine zum Zubereiten des Getränks, beispielsweise ein Mahl-Grad für Kaffeebohnen, ein Brühwasserdruck, eine Brühtemperatur, eine Brühwassermenge, eine Brühdauer, eine Milchmenge, einstellen bzw. anpassen.

Gemäß einer weiteren bevorzugten Weiterbildung des Verfahrens umfasst der erkannte Objektzustand des wenigstens einen Objekts einen Füllstand des Behältnisses zum Aufnehmen des mittels der Kaffeemaschine zubereiteten Getränks. Die Kaffeemaschine wird dabei derart angesteuert, dass in Abhängigkeit vom erkannten momentanen Füllstand des Behältnisses das Befüllen des Behältnisses fortgesetzt oder beendet wird.

Gemäß einer anderen bevorzugten Weiterbildung des Verfahrens umfasst der erkannte Objektzustand des wenigstens einen Objekts den Füllstand des Behältnisses zum Aufnehmen des mittels der Kaffeemaschine zubereiteten Getränks. Die Kaffeemaschine wird bei dieser Weiterbildung derart angesteuert, dass bei Erkennen eines bestimmten Füllstands die Kaffeemaschine das Befüllen des Behältnisses mit einer ersten Getränkekomponente beendet mit einer zweiten Getränkekomponente fortsetzt. Auf diese Weise kann die Zusammensetzung eines mittels der Kaffeemaschine zubereiteten Mischgetränks besonders präzise gesteuert werden.

Gemäß einer weiteren bevorzugten Weiterbildung des Verfahrens umfasst der erkannte Objektzustand des wenigstens einen Objekts eine geometrische Form eines aus dem wenigstens einen Auslass strömenden mittels der Kaffeemaschine zubereiteten Getränks, und die Kaffeemaschine wird derart angesteuert, dass in Abhängigkeit von der geometrischen Form des aus dem wenigstens einen Auslass strömenden Getränks ein Benutzer über eine Verschmutzung von wasser- oder milchführenden Komponenten der Kaffeemaschine informiert wird.

Gemäß einer ebenfalls bevorzugten Weiterbildung des Verfahrens umfasst der erkannte Objektzustand des wenigstens einen Objekts die geometrische Form des aus dem wenigstens einen Auslass strömenden mittels der Kaffeemaschine zubereiteten Getränks, und die Kaffeemaschine wird derart angesteuert, dass in Abhängigkeit von der geometrischen Form des aus dem wenigstens einen Auslass strömenden Getränks ein Pflegeprogramm der Kaffeemaschine zum Reinigen der wasser- oder milchführenden Komponenten der Kaffeemaschine durchgeführt wird. Diese Weiterbildung erlaubt eine einfache und selbsttätige Wartung und Pflegen der Kaffeemaschine, ohne dass der Benutzer hierfür manuell tätig werden müsste.

Gemäß einer vorteilhaften Weiterbildung des Verfahrens umfasst der erkannte Objektzustand des wenigstens einen Objekts eine geometrische Form des Behältnisses zum Aufnehmen des mittels der Kaffeemaschine zubereiteten Getränks, und die Kaffeemaschine wird derart angesteuert, dass in Abhängigkeit von der geometrischen Form des Behältnisses ein dieser geometrischen Form zugeordnetes Getränk mittels der Kaffeemaschine zubereitet wird. Auf diese Weise kann ein dem Behältnis entsprechendes Getränk selbsttätig, ohne dass eine Auswahl durch den Benutzer getätigt werden muss, zubereitet werden. Beispielsweise kann ein Espresso zubereitet werden, falls eine geometrische Form einer Espresso-Tasse erkannt wird, oder es kann ein Milchkaffee, insbesondere ein sog. "Latte Macchiato" zubereitet werden, falls erkannt wurde, dass das Behältnis aufgrund seiner geometrischen Form die hierzu erforderliche Mindesthöhe aufweist.

Gemäß einer weiteren vorteilhaften Weiterbildung des Verfahrens umfasst der erkannte Objektzustand des wenigstens einen Objekts eine geometrisch Formgebung des Behältnisses zum Aufnehmen des mittels der Kaffeemaschine zubereiteten Getränks. Bei dieser Weiterbildung wird die Kaffeemaschine derart angesteuert, dass in Abhängigkeit von der geometrischen Form des Behältnisses das Zubereiten eines dieser geometrischen Form des Behältnisses zugeordneten Getränks einem Benutzer vorgeschlagen wird. Bei dieser Weiterbildung des Verfahrens kann ein Benutzer eine Zubereitung eines der geometrischen Form des Behältnisses als entsprechend zugeordneten Getränks vor dessen Zubereitung bestätigen.

Gemäß einer ebenfalls vorteilhaften Weiterbildung des Verfahrens umfasst der erkannte Objektzustand des wenigstens einen Objekts, eine Anordnung des Behältnisses zum Aufnehmen des mittels der Kaffeemaschine zubereiteten Getränks relativ zum wenigstens einen Auslass, und die Kaffeemaschine wird derart angesteuert, dass in Abhängigkeit von der Anordnung des Behältnisses relativ zum wenigstens einen Auslass ein Benutzer für diese Anordnung informiert wird. Auf diese Weise wird dem Benutzer ermöglicht ein Behältnis, welches in einer zum Aufnehmen des mittels der Kaffeemaschine zubereiteten Getränks nicht oder schlecht geeigneten Position angeordnet ist, in eine sich unter dem wenigstens einen Auslass befindliche Position zu verschieben, in welcher das Behältnis das Getränk optimal aufnehmen kann.

Ebenfalls vorteilhaft umfasst der erkannte Objektzustand des wenigstens einen Objekts eine Anordnung des Behältnisses zum Aufnehmen des mittels der Kaffeemaschine zubereiteten Getränks relativ zu einem Abtropfgitter der Kaffeemaschine, und die Kaffeemaschine wird derart angesteuert, dass in Abhängigkeit von der Anordnung des Behältnisses relativ zum dem Abtropfgitter ein Benutzer über diese Anordnung informiert wird. Auch auf diese Weise kann ein Benutzer rechtzeitig darüber informiert werden, falls ein Behältnis sich in einer zum Aufnehmen eines mittels der Kaffeemaschine zubereiteten Getränks nicht oder schlecht geeigneten Position befindet.

Bevorzugt wird der Objektzustand wenigstens eines in einem Innenraum der Kaffeemaschine angeordneten Objekts erkannt. Auf diese Weise können auch für einen Benutzer nicht ohne ein Öffnen der Kaffeemaschine sichtbare oder nicht ohne ein Entfernen von Kaffeemaschinengehäuseteilen sichtbare Objekte erkannt werden.

Gemäß einer vorteilhaften Weiterbildung des Verfahrens umfasst der bekannte Objektzustand des wenigstens einen Objekts eine Verschmutzung des Innenraums der Kaffeemaschine, und die Kaffeemaschine wird derart angesteuert, dass in Abhängigkeit von der Verschmutzung des Innenraums ein Pflegeprogramm der Kaffeemaschine zum Entfernen der Verschmutzung durchgeführt wird. Mittels dieser Weiterbildung können Verschmutzungen, welche für einen Benutzer nicht direkt sichtbar sind, erkannt werden, und die Kaffeemaschine selbsttätig, ohne dass ein Eingreifen eines Benutzers notwendig ist, gereinigt und gepflegt werden.

Besonders bevorzugt wird das Bild des Bereichs der Kaffeemaschine über eine Reflektion an wenigstens einem an der Kaffeemaschine vorgesehenen Spiegel erfasst. Diese Weiterbildung erlaubt das Erfassen eines Bildes wenigstens eines Objekts und dessen Objektzustands aus mehreren Perspektiven bei gleichzeitiger Verwendung jedoch nur einer geringen Anzahl an Kameras, idealerweise nur einer Kamera.

Die Erfindung betrifft ferner eine Kaffeemaschine mit einer Kamera zum Erfassen eines Bildes eines Bereichs der Kaffeemaschine und mit einer Steuerungs-/Regelungseinrichtung, welche zum Durchführen des vorangehend vorgestellten Verfahrens eingerichtet/programmiert ist. Die vorangehend vorgestellten Vorteile des erfindungsgemäßen Verfahrens übertragen sich somit auf die erfindungsgemäße Kaffeemaschine. Die Steuerungs-/Regelungseinrichtung der Kaffeemaschine wirkt außerdem mit einer Auswertungseinrichtung zum Erkennen eines Objektzustands wenigstens eines Objekts im mittels der Kamera erfassten Bild zusammen. Dabei kann die Auswertungseinrichtung in der Kaffeemaschine verbaut sein oder auch außerhalb der Kaffeemaschine vorgesehen und mittels der Kaffeemaschine, beispielsweise über das Internet, kommunizierend verbunden sein.

Weitere wichtige Merkmale und Vorteile der Erfindung ergeben sich aus den Unteransprüchen, aus der Zeichnung und aus der zugehörigen Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

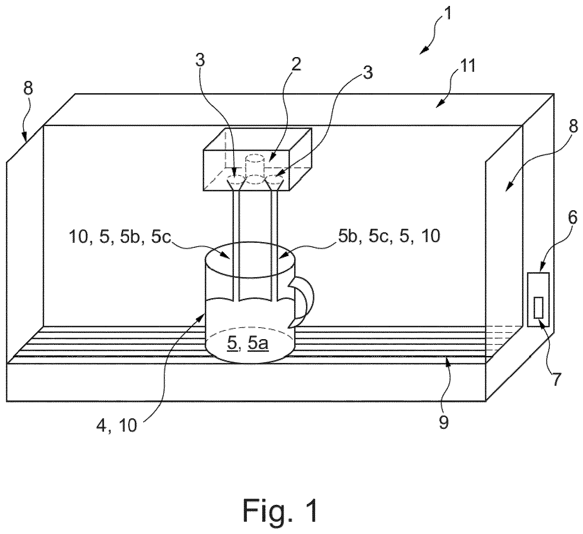

Die einzige Figur 1 illustriert ein Beispiel einer erfindungsgemäßen, nicht vollständig dargestellten Kaffeemaschine 1, welche zur Durchführung des erfindungsgemäßen Verfahrens ausgebildet ist. Die Kaffeemaschine 1 ist mit einem Gehäuse 11 ausgestattet. Die Kaffeemaschine 1 umfasst außerdem eine Steuerungs-/Regelungseinrichtung 6, welche zur Durchführung des erfindungsgemäßen Verfahrens eingerichtet/programmiert ist. Im Beispiel der Figur 1 umfasst die Kaffeemaschine zudem eine Auswertungseinrichtung 7 zum Erkennen eines Objektzustands wenigstens eines Objekts 10 in einem Bild, welches die Kaffeemaschine 1 enthält. Im Beispiel der Figur 1 weist die Kaffeemaschine 1 zur Bildererzeugung eine Kamera 2 auf, welche im Bereich von zwei Auslässen 3 der Kaffeemaschine 1 angeordnet ist. Die Kamera 2 ist dabei derart positioniert und ausgerichtet, dass sie ein Bild eines sich unterhalb der Auslässe 3 befindlichen Bereichs der Kaffeemaschine 1 erfassen kann.

Im Beispiel der Figur 1 überlappt dieser Bereich unterhalb der Auslässe 3 ein Abtropfgitter 9 und eine Behältnis-Aufnahme, auf welcher ein Behältnis 4 zum Befüllen mit einem Getränk 5 angeordnet werden kann. Mit anderen Worten, die Kamera 2 ist derart an der Kaffeemaschine 1 angeordnet, dass sie ein Bild des Behältnisses 4 und des Abtropfgitters 9 entlang einer Draufsicht auf das Behältnis 4 bzw. auf das Abtropfgitters 9 erfassen kann.

Die Auswertungseinrichtung 7 ist zweckmäßig Teil der Steuerungs-/Regelungseinrichtung 6. Denkbar ist aber auch, dass die Auswertungseinrichtung 7 extern an der Kaffeemaschine 1 vorgesehen und mit dieser über das Internet kommunizierend verbunden ist. Die Auswertungseinrichtung 7 kann dabei Teil eines Cloud-Computing-Netzwerks (in Figur 1 nicht gezeigt) sein.

Im Beispiel der Figur 1 ist die Auswertungseinrichtung 7 zur Durchführung des sogenannten "Deep Learning" ausgebildet und mit Hilfe dieser "Deep-Learning-Konfiguration" auf die Erkennung von Objektzuständen von Objekten trainiert, die in Bildern vorhanden sind, welche die Kaffeemaschine 1 abbilden. Die Objekterkennung durch die Auswertungseinrichtung 7 erfolgt unter Einsatz von künstlicher Intelligenz. Hierzu kann die Auswertungseinrichtung 7 ein neuronales Netz verwenden.

Im Beispiel der Figur 1 sind entlang einer horizontalen Erstreckungsrichtung der Kaffeemaschine 1 im Abstand zueinander zwei Spiegel 8 angeordnet. Dabei sind die Spiegel 8 derart positioniert, dass durch Reflektion an den beiden Spiegeln 8 mittels der Kamera 2 jeweils ein Bild des Bereichs unterhalb der Auslässe 3 erfasst werden kann.

Im Folgenden wird das erfindungsgemäße Verfahren beispielhaft erläutert:
Gemäß dem Verfahren wird von der Kamera 2 ein Bild des besagten Bereichs unterhalb der Auslässe 3 erfasst. Zusätzlich können weitere Bilder mithilfe der Spiegel 8 erfasst werden. Anschließend wird ein Objektzustand des als Behältnis 4 ausgebildeten Objekts 10 im erfassten Bild mittels der Auswertungseinrichtung 7 der Steuerungs-/Regelungseinrichtung 6 erkannt. Dabei ordnet die Auswertungseinrichtung 7 in dem Bild enthaltene Informationen weiteren Referenz-Informationen zu, die der Auswertungseinrichtung 7 zuvor mittels "Deep Learning" antrainiert wurden.

Im Beispiel der Figur 1 umfasst der mittels der Auswertungseinrichtung 7 erkannte Objektzustand des Behältnisses 4 einen Füllstand des Behältnisses 4 beim Befüllen mit einem von der Kaffeemaschine zubereiteten Getränk 5. Die Kaffeemaschine 1 wird in Abhängigkeit vom momentanen Füllstand mittels der Steuerungs-/Regelungseinrichtung 6 angesteuert.

Im Beispiel der Figur 1 ist das Behältnis 4 im Zuge des Befüllvorgangs zur Hälfte mit einer ersten Getränkekomponente 5a des Getränks 5 befüllt. Bei dem zuzubereitenden Getränk 5 handelt es sich dabei exemplarisch um Milchkaffee. Die erste Getränkekomponente 5a ist eine Kaffeekomponente des Milchkaffees, welcher jeweils zur Hälfte aus dieser Kaffeekomponente und zur Hälfte aus Milch - der zweiten Getränkekomponente 5b bestehen - soll. Da das Behältnis 4 bereits zur Hälfte gefüllt ist, wird die Befüllung des Behältnisses 4 von der Steuerungs-/Regelungseinrichtung 6 gestoppt und die Befüllung mit der zweiten Getränkekomponente 5b - der Milch - gestartet. Sobald der Füllstand des Behältnisses 4 einen gewünschten Soll-Wert erreicht hat, wird der Befüllvorgang von der Steuerungs-/Regelungseinrichtung 6 beendet.

Im Beispiel der Figur 1 umfasst der mittels der Auswertungseinrichtung 7 erkannte Objektzustand des Behältnisses 4 außerdem ein maximales Aufnahmevolumen des Behältnisses 4 zum Aufnehmen des mittels der Kaffeemaschine zubereiteten Getränks 5, und die Kaffeemaschine 1 wird mittels der Steuerungs-/Regelungseinrichtung 6 derart angesteuert, dass in Abhängigkeit von dem erkannten maximalen Aufnahmevolumen des Behältnisses 4 das Zubereiten des Getränks 5 und das Befüllen des Behältnisses 4 entsprechend angepasst wird.

Im Beispiel der Figur 1 umfasst der erkannte Objektzustand des Behältnisses 4 außerdem die Position des Behältnisses 4 relativ zu den beiden Auslässen 3, und die Kaffeemaschine 1 wird mittels der Steuerungs-/Regelungseinrichtung 6 derart angesteuert, dass der Benutzer informiert wird, falls das Behältnis 4 nicht derart unter den Auslässen 3 angeordnet ist, dass ein aus den Auslässen 3 strömendes Getränk 5c von dem Behältnis 4 aufgenommen wird.

Außerdem umfasst der erkannte Objektzustand des Behältnisses 4 eine Position des Behältnisses 4 relativ zu dem Abtropfgitter 9 der Kaffeemaschine 1. Die Kaffeemaschine 1 wird derart angesteuert, dass der Benutzer informiert wird, falls das Behältnis 4 nicht derart unterhalb der Auslässe 3 angeordnet ist, dass es das aus den Auslässen austretende Getränk 5c auch tatsächlich aufnehmen kann.

Im Beispiel der Figur 1 kann der erkannte Objektzustand des Behältnisses 4 außerdem eine geometrische Form des Behältnisses 4 umfassen. Die Kaffeemaschine 1 wird dabei derart angesteuert, dass in Abhängigkeit von der bekannten geometrischen Form des Behältnisses 4 ein dieser geometrischen Form zugeordneten Getränk mittels der Kaffeemaschine 1 zubereitet wird. Alternativ oder zusätzlich kann dem Benutzer in Abhängigkeit von der geometrischen Form des Behältnisses 4 das Zubereiten eines der erkannten geometrischen Form des Behältnisses 4 zugeordneten Getränks vorgeschlagen werden.

Gemäß einer weiteren alternativen Variante des Verfahrens umfasst der Objektzustand die geometrische Formgebung eines Objekts 10, welches durch das aus den beiden Auslässen 3 ausströmende Getränk 5c gebildet wird. Die Kaffeemaschine 1 wird derart angesteuert, dass in Abhängigkeit von der geometrischen Form, insbesondere einer Breite des "Strahls" des aus den beiden Auslässen 3 ausströmenden Getränks 5c, ein Pflegeprogramm der Kaffeemaschine 1 zum Reinigen von wasser- oder milchführenden Komponenten (in Figur 1 nicht gezeigt) der Kaffeemaschine 1 durchgeführt wird. Optional kann der Benutzer in Abhängigkeit von der erkannten geometrischen Form des aus den beiden Auslässen 3 strömenden Getränks 5c über eine Verschmutzung der wasser- oder milchführenden Komponenten der Kaffeemaschine 1 - eine solche Verschmutzung kann zu einer Änderung der geometrischen Formgebung des Strahls führen - informiert werden.

Gemäß einer weiteren alternativen Variante des Verfahrens umfasst der erkannte Objektzustand eine Verschmutzung des Innenraums der Kaffeemaschine 1. Falls im Innenraum der Kaffeemaschine 1 eine Verschmutzung erkannt wird, wird die Kaffeemaschine 1 derart angesteuert, dass ein Pflegeprogramm der Kaffeemaschine 1 zum Entfernen der Verschmutzung durchgeführt wird. Alternativ oder zusätzlich wird mittels der Steuerungs-/Regelungseinrichtung 6 die Kaffeemaschine 1 derart angesteuert, dass der Benutzer über die vorliegende Verschmutzung im Innenraum informiert wird.

In einer weiteren Ausführungsform des Verfahrens umfasst der erkannte Objektzustand einen Füllstand einer Tropfschale der Kaffeemaschine 1, einen Füllstand eines Milchbehältnisses der Kaffeemaschine 1 sowie einen Füllstand einer Tresterschale der Kaffeemaschine 1 (in Figur 1 sind die Tropfschale, das Milchbehältnis und die Tresterschale aus Gründen der Übersichtlichkeit nicht gezeigt). In Abhängigkeit vom Füllstand einer oder mehrerer dieser drei Füllstände kann der Benutzer der Kaffeemaschine 1 von der Steuerungs-/Regelungseinrichtung 6 über den jeweiligen Füllstand informiert werden.

### Bezugszeichenliste

- 1: Kaffeemaschine
- 2: Kamera
- 3: Auslass
- 4: Behältnis
- 5: Getränk
- 5a: erste Getränkekomponente
- 5b: zweite Getränkekomponente
- 5c: aus einem Auslass strömendes Getränk
- 6: Steuerungs-Regelungseinrichtung
- 7: Auswertungseinrichtung
- 8: Spiegel
- 9: Abtropfgitter
- 10: Objekt
- 11: Gehäuse

## Patentansprüche

1. Verfahren zum Ansteuern einer Kaffeemaschine (1),
umfassend die folgenden Maßnahmen:
a) Erzeugen eines Bildes (1), in welchem die Kaffeemaschine (1) wenigstens teilweise enthalten ist, mittels einer an der Kaffeemaschine (1) vorgesehenen Kamera (2);
b) Erkennen wenigstens eines Objektzustands von wenigstens einem in oder an der Kaffeemaschine vorhandenen Objekt (10) in dem in Maßnahme a) erfassten Bild;
c) Ansteuern der Kaffeemaschine (1) in Abhängigkeit von dem in Maßnahme b) erkannten Objektzustand des wenigstens einen Objekts (10),
**dadurch gekennzeichnet, dass**
in Maßnahme b) der Objektzustands des wenigstens einen Objekts (10) mittels einer Auswertungseinrichtung (7) erkannt wird, die künstliche Intelligenz einsetzt.

2. Verfahren nach Anspruch 1,
**dadurch gekennzeichnet, dass**
in Maßnahme b) der Objektzustands des wenigstens einen Objekts (10) mittels einer Auswertungseinrichtung (7) erkannt wird, die maschinelles Lernen, vorzugsweise "Deep Learning", einsetzt.

3. Verfahren Anspruch 1 oder 2,
**dadurch gekennzeichnet, dass**
in Maßnahme b) der Objektzustands des wenigstens einen Objekts (10) zusätzlich durch Auswerten wenigstens eines Betriebsparameters der Kaffeemaschine (1) erkannt wird.

4. Verfahren nach einem der Ansprüche 1 bis 3,,
**dadurch gekennzeichnet, dass**
in Maßnahme b) der Objektzustand wenigstens eines im Bereich wenigstens eines Auslasses (3) der Kaffeemaschine (1) angeordneten Objekts (10) erkannt wird.

5. Verfahren nach einem der vorhergehenden Ansprüche,
**dadurch gekennzeichnet, dass**
der in Maßnahme b) erkannte Objektzustands des wenigstens einen Objekts (10), einen Füllstand eines Behältnisses (4) umfasst; und dass
in Maßnahme c) die Kaffeemaschine derart angesteuert wird, dass in Abhängigkeit vom Füllstand des Behältnisses (4) ein Benutzer über diesen Füllstand informiert wird.

6. Verfahren nach einem der vorhergehenden Ansprüche,
**dadurch gekennzeichnet, dass**
der in Maßnahme b) erkannte Objektzustands des wenigstens einen Objekts (10), einen Füllstand einer Tropfschale der Kaffeemaschine (1) umfasst, und
in Maßnahme c) die Kaffeemaschine (1) derart angesteuert wird, dass in Abhängigkeit vom Füllstand der Tropfschale ein Benutzer über diesen Füllstand informiert wird.

7. Verfahren nach einem der vorhergehenden Ansprüche,
**dadurch gekennzeichnet, dass**
der in Maßnahme b) erkannte Objektzustands des wenigstens einen Objekts (10), einen Füllstand eines Milchbehältnisses der Kaffeemaschine (1) umfasst; und dass in Maßnahme c) die Kaffeemaschine (1) derart angesteuert wird, dass in Abhängigkeit vom Füllstand des Milchbehältnisses ein Benutzer über diesen Füllstand informiert wird.

8. Verfahren nach einem der vorhergehenden Ansprüche,
**dadurch gekennzeichnet, dass**
der in Maßnahme b) erkannte Objektzustands des wenigstens einen Objekts (10), einen Füllstand einer Tresterschale der Kaffeemaschine (1) umfasst; und dass in Maßnahme c) die Kaffeemaschine (1) derart angesteuert wird, dass in Abhängigkeit vom Füllstand der Tresterschale ein Benutzer über diesen Füllstand informiert wird.

9. Verfahren nach einem der vorhergehenden Ansprüche,
**dadurch gekennzeichnet, dass**
der in Maßnahme b) erkannte Objektzustands des wenigstens einen Objekts (10), ein maximales Aufnahmevolumen eines Behältnisses zum Aufnehmen eines mittels der Kaffeemaschine (1) zubereiteten Getränks (5) umfasst; und dass
in Maßnahme c) die Kaffeemaschine (1) derart angesteuert wird, dass in Abhängigkeit vom maximalen Aufnahmevolumen des Behältnisses ein die Menge an zubereitetem Getränk (5) durch die Kaffeemaschine (1) an das erkannte maximale Aufnahmevolumen angepasst wird.

10. Verfahren nach einem der vorhergehenden Ansprüche,
**dadurch gekennzeichnet, dass**
der in Maßnahme b) erkannte Objektzustands des wenigstens einen Objekts (10), einen Füllstand des Behältnisses (4) zum Aufnehmen des mittels der Kaffeemaschine (1) zubereiteten Getränks (5) umfasst; und dass
in Maßnahme c) die Kaffeemaschine (1) derart angesteuert wird, dass in Abhängigkeit vom Füllstand des Behältnisses (4) ein Befüllen des Behältnisses (4) mittels der Kaffeemaschine (1) angehalten wird.

11. Verfahren nach einem der vorhergehenden Ansprüche,
**dadurch gekennzeichnet, dass**
der in Maßnahme b) erkannte Objektzustands des wenigstens einen Objekts (10), eine geometrische Form eines aus dem wenigstens einen Auslass (3) strömenden mittels der Kaffeemaschine (1) zubereiteten Getränks (5c) umfasst; und dass in Maßnahme c) die Kaffeemaschine (1) derart angesteuert wird, dass in Abhängigkeit von der geometrischen Form des aus dem wenigstens einen Auslass (3) strömenden Getränks (5c) ein Benutzer über eine Verschmutzung von wasser- oder milchführenden Komponenten der Kaffeemaschine (1) informiert wird, und/oder
in Maßnahme c) die Kaffeemaschine (1) derart angesteuert wird, dass in Abhängigkeit von der geometrischen Form des aus dem wenigstens einen Auslass (3) strömenden Getränks (5c) ein Pflegeprogramm der Kaffeemaschine (1) zum Reinigen der wasser- oder milchführenden Komponenten durchgeführt wird.

12. Verfahren nach einem der vorhergehenden Ansprüche,
**dadurch gekennzeichnet, dass**
der in Maßnahme b) erkannte Objektzustands des wenigstens einen Objekts (10), eine geometrische Form des Behältnisses (4) zum Aufnehmen des mittels der Kaffeemaschine (1) zubereiteten Getränks (5) umfasst; und dass
in Maßnahme c) die Kaffeemaschine (1) derart angesteuert wird, dass in Abhängigkeit von der geometrischen Form des Behältnisses (4) ein dieser geometrischen Form zugeordnetes Getränk (5) mittels der Kaffeemaschine (1) zubereitet wird, und/oder in Maßnahme c) die Kaffeemaschine (1) derart angesteuert wird, dass in Abhängigkeit von der geometrischen Form des Behältnisses (4) das Zubereiten eines dieser geometrischen Form des Behältnisses (4) zugeordneten Getränks (5) einem Benutzer vorgeschlagen wird.

13. Verfahren nach einem der vorhergehenden Ansprüche,
**dadurch gekennzeichnet, dass**
der in Maßnahme b) erkannte Objektzustands des wenigstens einen Objekts (10), eine Position des Behältnisses (4) zum Aufnehmen des mittels der Kaffeemaschine (1) zubereiteten Getränks (5) relativ zu einem Abtropfgitter (9) der Kaffeemaschine (1) umfasst.

14. Verfahren nach einem der vorhergehenden Ansprüche,
**dadurch gekennzeichnet, dass**
in Maßnahme b) der Objektzustand wenigstens eines in einem Innenraum der Kaffeemaschine (1) angeordneten Objekts (10) erkannt wird.

15. Verfahren nach einem der vorhergehenden Ansprüche,
**dadurch gekennzeichnet, dass**
der in Maßnahme b) erkannte Objektzustands des wenigstens einen Objekts (10), eine Verschmutzung des Innenraums der Kaffeemaschine (1) umfasst, und
in Maßnahme c) die Kaffeemaschine (1) derart angesteuert wird, dass in Abhängigkeit von der Verschmutzung des Innenraums ein Benutzer über die Verschmutzung informiert wird; und/oder dass
in Maßnahme c) die Kaffeemaschine (1) derart angesteuert wird, dass in Abhängigkeit von der Verschmutzung des Innenraums ein Pflegeprogramm der Kaffeemaschine (1) zum Entfernen der Verschmutzung durchgeführt wird.

16. Verfahren nach einem der vorhergehenden Ansprüche,
**dadurch gekennzeichnet, dass**
in Maßnahme a) das Bild des Bereichs der Kaffeemaschine (1) über eine Reflektion an wenigstens einem an der Kaffeemaschine (1) vorgesehenen Spiegel (8) erfasst wird.

17. Kaffeemaschine (1),
- mit einer Kamera (2) zum Erfassen eines Bildes eines Bereichs der Kaffeemaschine (1);
- mit einer Steuerungs-/Regelungseinrichtung (6), welche zum Durchführen des Verfahrens nach einem der vorhergehenden Ansprüche eingerichtet/programmiert ist und mit einer Auswertungseinrichtung (7) zum Erkennen eines Objektzustands wenigstens Objekts (10) im mittels der Kamera (2) erfassten Bild zusammenwirkt.
